# EUROPÄISCHE PATENTSCHRIFT

(11) **EP 2 210 031 B1**
(45) Veröffentlichungstag und Bekanntmachung des Hinweises auf die Patenterteilung: **04.12.2013**
(21) Anmeldenummer: 08786912.9
(22) Anmeldetag: 06.08.2008
(51) Int. Cl.: F16L 27/08

(54) **RINGSTUTZENKUPPLUNG**
ANNULAR CONNECTOR COUPLING
STRUCTURE DE RACCORD ANNULAIRE

(30) Priorität: 04.10.2007 DE 102007047406
(43) Veröffentlichungstag der Anmeldung: 28.07.2010
(73) Patentinhaber: ContiTech Techno-Chemie GmbH, 61184 Karben (DE)
(72) Erfinder: SCHÄFER, Frank, 63679 Schotten (DE); MINNERT, Volker, 61137 Schönbeck-Büdesheim (DE)
(74) Vertreter: Finger, Karsten
(86) Internationale Anmeldenummer: PCT/EP2008/060304
(87) Internationale Veröffentlichungsnummer: WO 2009/043623

(56) Entgegenhaltungen:
- DE-U- 7 338 638

## Beschreibung

Die Erfindung betrifft eine Ringstutzenkupplung mit einem hohlen Ringstutzen, einer Hohlschraube und mindestens einer Dichtscheibe, wobei der Ringstutzen die Hohlschraube aufnimmt und die mindestens eine Dichtscheibe auf das aus dem Ringstutzen herausragende Ende der Hohlschraube aufgeschoben ist.

Derartige Kupplungen sind an sich bekannt und werden vor allem bei Verbindungen von Fluidleitungen eingesetzt, wenn eine beliebige Winkelstellung der Fluidleitung zueinander oder zu anderen weiterführenden Leitungskomponenten gewährleistet sein muss.

Der Ringstutzen weist dabei meist eine im Inneren angeordnete ringförmige Hohlnut auf, die mit Querbohrungen der eingesteckten Hohlschraube kommuniziert. Die Hohlnut des Ringstutzens mündet in einen oder mehrere Rohr- oder Schlauchanschlüsse, sodass Fluid, welches durch die Hohlschraube in die Kupplung einleitbar ist, durch die Querbohrungen der Hohlschraube und die Hohlnut des Ringstutzens über den Rohr- oder Schlauchanschluss in die Fluidleitung leitbar ist. Die Abdichtung der Kupplung erfolgt meist durch Flachdichtungen, sowohl zwischen dem Kopf der Hohlschraube und dem Ringstutzen, als auch zwischen dem Ringstutzen und der weiterführenden Leitungskomponente.

Bei der Montage sind also vier Bauteile zu handhaben, was vor Ort leicht zu Fehlern durch Weglassen von Bauteilen führen kann. Daher ist eine Verliersicherung, die die Bauteile bis zu der endgültigen Montage sicher zusammenhält, vorteilhaft.

In der DE 73 38 638 U ist eine Verschraubungseinheit mit einer Hohlschraube und einem Ringflansch offenbart, bei der ein Dichtring zwischen Schraubenkopf und Ringflansch als normale Flachdichtung ausgebildet ist, die gegenüberliegende Dichtung jedoch neben einem thorusförmigen Grundkörper einen zunächst konischen, vom Thorus abragenden Bereich aufweist, der durch eine plastische Verformung nach dem Aufstecken auf die Hohlschraube in einen ebenen Zustand verformt ist und dadurch in eine Ringnut in der Hohlschraube eingreift, wodurch der Dichtring von der Hohlschraube nicht mehr unbeabsichtigt abziehbar, also unverlierbar ist. Die Herstellung einer derartigen Dichtung ist jedoch verhältnismäßig aufwendig, da mehrere Umformoperationen zur Ausbildung der thorusförmigen Geometrie mit einem konischen Bereich erforderlich sind.

In der DE 93 14 796 U ist eine Ringstutzenkupplung mit einer ersten und einer zweiten Flachdichtung der ansonsten gleichen Bauweise gezeigt, bei der die Unverlierbarkeit der zweiten Dichtung durch axiale Stauchung erzeugt wird.

Diese Lösung erfordert eine verhältnismäßig hohe Flächenpressung, da die Dichtscheibe allein durch die axiale Stauchung, also quasi durch eine Massivumformung, plastisch verformt werden muss. Daher muss der Ringstutzen diese hohen Flächenpressungen ohne Verformung aushalten, was die Werkstoffauswahl für dieses Bauteil entsprechend einschränkt.

Der Erfindung liegt die Aufgabe zugrunde, eine Ringstutzenkupplung der eingangs beschriebenen Art zu schaffen, bei der die Bauteile durch eine einfach herzustellende, ohne hohe Kräfte ausbildbare Verliersicherung bis zur endgültigen Montage sicher und unverlierbar zusammenhaltbar sind.

Diese Aufgabe wird dadurch gelöst, dass die Dichtscheibe vor dem Aufschieben auf das Ende der Hohlschraube eine konische Form mit einer zylindrischen, zentrischen Bohrung aufweist und die Hohlschraube in dem Bereich, in dem die aufgeschobene Dichtscheibe zu liegen kommt, eine ringförmige, nach innen springende Nut aufweist und die Dichtscheibe nach dem Aufstecken durch plastische Verformung eine ebene Form aufweist, wobei nach der plastischen Verformung der Dichtscheibe die vorher zylindrische Bohrung eine konische Form derart aufweist, dass die Bohrung an der zum Ringstutzen weisenden Seite der Dichtscheibe eine Ringkante bildet, deren Durchmesser kleiner ist, als der Außendurchmesser der Hohlschraube und die Ringkante der Bohrung in die ringförmige Nut der Hohlschraube eingreift.

Durch die verkleinerte, in die Nut eingreifende Innenkante der Bohrung der Dichtscheibe, ist die Dichtscheibe nicht mehr von der Hohlschraube abziehbar. Der Vorteil dieser Anordnung ist, dass derartige Dichtscheiben sehr einfach und kostengünstig herstellbar sind und zum Zurückverformen in den ebenen Zustand nur geringe Kräfte erforderlich sind. Eine axiale Stauchung ist nicht erforderlich, es treten nur Biegekräfte auf, die gegenüber denen einer Massivumformung wesentlich geringer sind.

Anhand der Zeichnungen wird nachstehend ein Beispiel der Erfindung näher erläutert. Es zeigt:
- Fig. 1: eine erfindungsgemäße Ringkupplung mit konischer Dichtscheibe vor der Zurückverformung der Dichtscheibe
- Fig. 2: die erfindungsgemäße Ringkupplung mit zurückverformter Ringscheibe

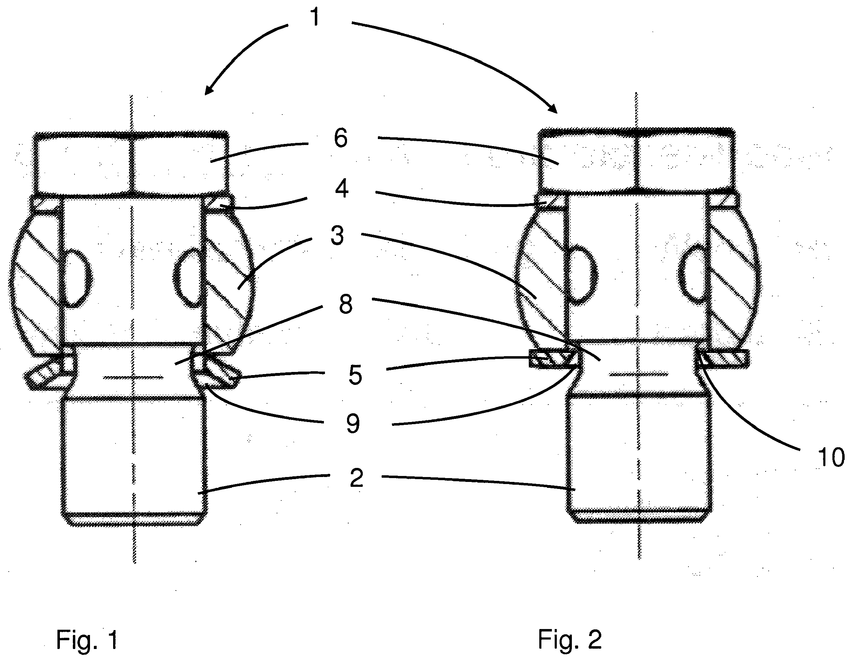

In Fig. 1 ist eine erfindungsgemäße Ringkupplung 1 mit einer Hohlschraube 2, mit einem Ringstutzen 3, einer Flachringdichtung 4 und einer Dichtscheibe 5 dargestellt. Die zwischen dem Kopf 6 der Hohlschraube 2 und dem Ringstutzen 3 angeordnete Flachringdichtung 4 dichtet den Kopf 6 gegenüber dem Ringstutzen 3 ab. Die Hohlschraube 2 weist an ihrem aus dem Ringstutzen 3 herausragenden Ende eine Ringnut 8 auf. Die Dichtscheibe 5 ist konisch ausgebildet und weist eine zylindrische Bohrung 9 auf. In diesem Zustand ist die Dichtscheibe 5 auf die Hohlschraube 2 aufschiebbar und wieder abziehbar.

In Fig. 2 ist die gleiche Anordnung aus Hohlschraube 2, Ringstutzen 3 und Dichtungen 4 und 5 gezeigt, wobei hier jedoch die Dichtscheibe 5 in eine ebene Form zurückverformt ist. Durch die Zurückverformung ist die ehemals zylindrische Bohrung 9 nunmehr konisch ausgebildet und bildet an der dem Ringstutzen 3 zugeordneten Seite eine Ringkante 10, deren Durchmesser kleiner ist als der Durchmesser der Hohlschraube 2. Die Ringkante 10 greift in die Ringnut 8 ein, sodass die Dichtscheibe 5 nicht mehr von der Hohlschraube 2 abziehbar ist. Damit sind die Bauteile der Ringkupplung 1 unverlierbar miteinander verbunden.

### Bezugszeichenliste

### (Teil der Beschreibung)

- 1: Ringkupplung
- 2: Hohlschraube
- 3: Ringstutzen
- 4: Flachringdichtung
- 5: Dichtscheibe
- 6: Kopf der Hohlschraube 2
- 8: Ringnut in der Hohlschraube 2
- 9: zylindrische Bohrung der Dichtscheibe 5
- 10: Ringkante der Dichtscheibe 5

## Patentansprüche

1. Ringstutzenkupplung mit einem hohlen Ringstutzen (3), einer Hohlschraube (2) und mindestens einer Dichtscheibe (5), wobei der Ringstutzen (3) die Hohlschraube (2) aufnimmt und die mindestens eine Dichtscheibe (5) auf das aus dem Ringstutzen (3) herausragende Ende der Hohlschraube (2) aufgeschoben ist, wobei
die Hohlschraube (2) in dem Bereich, in dem die aufgeschobene Dichtscheibe (5) zu liegen kommt, eine ringförmige, nach innen springende Nut (8) aufweist und
die Dichtscheibe (5) nach dem Aufstecken durch plastische Verformung eine ebene Form aufweist,
**dadurch gekennzeichnet, dass**
die Dichtscheibe (5) vor dem Aufschieben auf das Ende der Hohlschraube (2) eine konische Form mit einer zylindrischen, zentrischen Bohrung (9) aufweist und nach der plastischen Verformung der Dichtscheibe (5) die vorher zylindrische Bohrung (9) eine konische Form derart aufweist, dass die Bohrung (9) an der zum Ringstutzen (3) weisenden Seite der Dichtscheibe (5) eine Ringkante (10) bildet, deren Durchmesser kleiner ist, als der Außendurchmesser der Hohlschraube (2) und die Ringkante (10) der Bohrung (9) in die ringförmige Nut (8) der Hohlschraube (2) eingreift.

## Claims

1. Ring-fitting coupling having a hollow ring fitting (3), a hollow bolt (2) and at least one sealing washer (5), the ring fitting (3) receiving the hollow bolt (2) and the at least one sealing washer (5) being pushed onto that end of the hollow bolt (2) which protrudes out of the ring fitting (3), the hollow bolt (2) having an annular, inwardly projecting groove (8) in the region in which the sealing washer (5) which is pushed on comes to lie, and the sealing washer (5) having a flat shape after being plugged on as a result of plastic deformation, **characterized in that**, before being pushed onto the end of the hollow bolt (2), the sealing washer (5) has a conical shape with a cylindrical, centric hole (9) and, after the plastic deformation of the sealing washer (5), the previously cylindrical hole (9) has a conical shape in such a way that, on that side of the sealing washer (5) which points towards the ring fitting (3), the hole (9) forms an annular edge (10), the diameter of which is smaller than the external diameter of the hollow bolt (2) and the annular edge (10) of the hole (9) engages into the annular groove (8) of the hollow bolt (2).

## Revendications

1. Structure de raccord annulaire comprenant un raccord annulaire creux (3), une vis creuse (2) et au moins une rondelle d'étanchéité (5), le raccord annulaire (3) recevant la vis creuse (2) et l'au moins une rondelle d'étanchéité (5) étant enfilée sur l'extrémité de la vis creuse (2) faisant saillie hors du raccord annulaire (3), la vis creuse (2) présentant, dans la région dans laquelle la rondelle d'étanchéité (5) enfilée vient s'appuyer, une rainure annulaire (8) saillant vers l'intérieur et la rondelle d'étanchéité (5) présentant, après avoir été enfilée, une forme plane du fait d'une déformation plastique, **caractérisée en ce que** la rondelle d'étanchéité (5) présente, avant l'enfilage sur l'extrémité de la vis creuse (2), une forme conique avec un alésage cylindrique centré (9) et **en ce qu'**après la déformation plastique de la rondelle d'étanchéité (5), l'alésage (9) préalablement cylindrique présente une forme conique de telle sorte que l'alésage (9) forme, sur le côté de la rondelle d'étanchéité (5) tourné vers le raccord annulaire (3), une arête annulaire (10) dont le diamètre est inférieur au diamètre extérieur de la vis creuse (2) et que l'arête annulaire (10) de l'alésage (9) vienne en prise dans la rainure annulaire (8) de la vis creuse (2) .
